(19) Europäisches Patentamt
European Patent Office
Office européen des brevets

(11) **EP 3 343 898 A1**

(12) **EUROPEAN PATENT APPLICATION**

(43) Date of publication:
**04.07.2018 Bulletin 2018/27**

(51) Int Cl.:
***H04N 5/232*** *(2006.01)*

(21) Application number: **17208854.4**

(22) Date of filing: **20.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **27.12.2016 JP 2016253636**

(71) Applicant: **Renesas Electronics Corporation Tokyo 135-0061 (JP)**

(72) Inventors:
• **MOROTOMI, Mamoru**
  **Tokyo, 135-0061 (JP)**
• **SUZUKI, Toshiya**
  **Tokyo, 135-0061 (JP)**

(74) Representative: **Betten & Resch**
**Patent- und Rechtsanwälte PartGmbB**
**Maximiliansplatz 14**
**80333 München (DE)**

(54) **CAMERA CONTROLLER, AND A CALIBRATION METHOD FOR A CORRECTION LENS**

(57)     In open-loop control, displacement of a correction lens cannot be detected. Therefore, the displacement of the correction lens cannot be appropriately corrected. To solve this problem, in a camera controller, a first storage unit stores therein a first correction amount for a standard tilt of a camera module with respect to a first force in which its acting direction in a camera coordinate system varies in accordance with a tilt of the camera module. A controller calculates an image stabilization amount, obtains a tilt correction amount for a tilt of the camera module based on the tilt of the camera module and the first correction amount, and controls a position of a correction lens included in an optical system in such a manner the correction lens is shifted within a plane perpendicular to an optical axis based on the image stabilization amount and the tilt correction amount.

FIG. 1

EP 3 343 898 A1

**Description**

CROSS-REFERENCE TO RELATED APPLICATIONS

The disclosure of Japanese Patent Application No. 2016-253636 filed on December 27, 2016 including the specification, drawings and abstract is incorporated herein by reference in its entirety.

BACKGROUND

The present invention relates to a camera controller and a calibration method for a correction lens of a camera and, for example, relates to a method of adjusting displacement of the position of the correction lens caused by a force varying in accordance with a tilt of the camera, a suspension supporting the correction lens, or the like.

A technique of performing closed-loop control for the position of a correction lens for image stabilization is conventionally known. For example, in a capturing device described in Japanese Unexamined Patent Application Publication No. 2009-168938, a correction lens optically reduces motion of an object image received through a taking lens. A position detecting unit detects the position of the correction lens and outputs a position detection signal indicating the detected position. A target-position calculating unit calculates a target position of a motion correcting unit based on a detection signal from a vibration detecting unit. A driving control unit controls the correction lens to be driven to the target position based on the position detection signal from the position detecting unit.

SUMMARY

Open-loop control does not require a position detecting element. Therefore, it is advantageous in that the cost can be reduced as compared with closed-loop control.

A correction lens is displaced by a force that depends on a tilt of a camera, e.g., gravity. The correction lens is also displaced by a force that does not depend on the tilt of the camera, e.g., a suspension.

In closed-loop control in which the position of the correction lens is detected, the displacement of the correction lens caused by these forces can be corrected appropriately. Meanwhile, in open-loop control, it is not possible to detect the displacement of the correction lens, and therefore the displacement of the correction lens caused by these forces cannot be corrected appropriately.

Other objects and novel features will be apparent from the description of this specification and the accompanying drawings.

A camera controller according to an embodiment controls a position of a correction lens included in an optical system in such a manner that the correction lens is shifted within a plane perpendicular to an optical axis based on a tilt correction amount for a detected tilt of a camera module with respect to a first force that varies in its acting direction in a camera coordinate system in accordance with the tilt of the camera module, and an image stabilization amount.

According to an embodiment, it is possible to appropriately correct displacement of a correction lens for image stabilization, caused by a force depending on a tilt of a camera, such as gravity, without providing an element that detects the position of the correction lens.

BRIEF DESCRIPTION OF THE DRAWINGS

FIG. 1 illustrates a configuration of a camera controller and a camera module according to the first embodiment.
FIG. 2 illustrates a configuration of a camera system of the first reference example.
FIG. 3 illustrates a configuration of a camera system of the second reference example.
FIG. 4A illustrates a position of a correction lens in the camera system of the first reference example when image stabilization is not performed, and FIG. 4B illustrates a position of a correction lens in the camera system of the second reference example when image stabilization is not performed.
FIG. 5 illustrates a configuration of a camera system according to the second embodiment.
FIG. 6 illustrates a configuration of an optical system.
FIG. 7 illustrates an example of a tilt of a camera module.
FIG. 8A illustrates a camera module 4, and FIG. 8B illustrates positions of a camera module and a chart in calibration of a position of a correction lens according to the third embodiment.
FIG. 9 illustrates a procedure of the calibration of the position of the correction lens according to the third embodiment.
FIG. 10 illustrates the procedure of the calibration of the position of the correction lens according to the third embodiment.

FIG. 11 illustrates the procedure of the calibration of the position of the correction lens according to the third embodiment.

FIG. 12 illustrates the procedure of the calibration of the position of the correction lens according to the third embodiment.

FIG. 13 illustrates the procedure of the calibration of the position of the correction lens according to the third embodiment.

FIG. 14 illustrates the procedure of the calibration of the position of the correction lens according to the third embodiment.

FIGS. 15A, 15B, and 15C are explanatory diagrams of the positions of the correction lens in the first process of the calibration.

FIGS. 16A, 16B, and 16C are explanatory diagrams of the positions of the correction lens in the second process of the calibration.

FIGS. 17A, 17B, and 17C are explanatory diagrams of the positions of the correction lens in the fourth process of the calibration.

FIGS. 18A, 18B, and 18C are explanatory diagrams of the positions of the correction lens in the firth process of the calibration.

FIGS. 19A, 19B, and 19C illustrate positions of a camera module and a chart in calibration of the position of a correction lens according to the fourth embodiment.

FIG. 20 illustrates a procedure of the calibration of the position of the correction lens according to the fourth embodiment.

FIG. 21 illustrates the procedure of the calibration of the position of the correction lens according to the fourth embodiment.

FIG. 22 illustrates the procedure of the calibration of the position of the correction lens according to the fourth embodiment.

FIG. 23 illustrates the procedure of the calibration of the position of the correction lens according to the fourth embodiment.

FIG. 24 illustrates a portion of a procedure of calibration of the position of a correction lens according to the fifth embodiment.

DETAILED DESCRIPTION

Embodiments of the present invention are described below with reference to the drawings.

First Embodiment

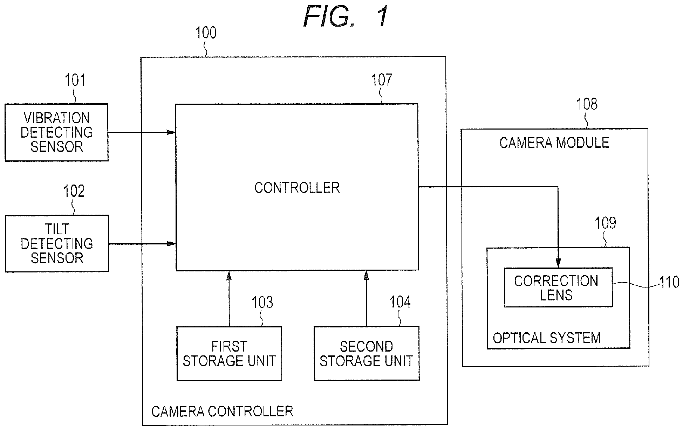

FIG. 1 illustrates a configuration of a camera controller and a camera module according to the first embodiment.

A camera controller 100 controls optical image stabilization. The camera controller 100 includes a controller 107, the first storage unit 103, and the second storage unit 104. A camera module 108 includes an optical system 109 including a correction lens 110.

The first storage unit 103 stores therein the first correction amount for a standard tilt of the camera module 108, which is a correction amount with respect to the first force that varies in its acting direction in a camera coordinate system in accordance with a tilt of the camera module 108. The camera coordinate system is a unique coordinate system set in the camera module 108.

The second storage unit 104 stores therein the second correction amount with respect to the second force that does not vary in its acting direction in the camera coordinate system in accordance with the tilt of the camera module 108.

The controller 107 detects a shift of an optical axis in the optical system 109 based on a result of detection by a vibration detecting sensor 101, and calculates an optical image stabilization amount in order to correct the shift. The controller 107 obtains a tilt correction amount for the detected tilt of the camera module 108 based on a difference between the tilt of the camera module 108 detected by a tilt detecting sensor 102 and the standard tilt, and the first correction amount. The controller 107 controls the position of the correction lens 110 included in the optical system 109 in such a manner that the correction lens 110 is shifted within a plane perpendicular to the optical axis based on the optical image stabilization amount, the tilt correction amount for the detected tilt of the camera module 108, and the second correction amount.

As described above, according to the present embodiment, the first correction amount for a standard tilt of a camera module, which is a correction amount with respect to the first force that varies in its acting direction in a camera coordinate system in accordance with a tilt of the camera module stored in advance, and the second correction amount with respect to the second force that does not vary in its acting direction in the camera coordinate system in accordance with the tilt of the camera module are used. Therefore, it is possible to appropriately correct displacement of a correction lens for image stabilization caused by a force depending on the tilt of the camera, such as gravity, and a force not depending on the tilt of the camera, such as a suspension, without providing an element that detects the position of the correction lens.

In the present embodiment, the position of the correction lens 110 is controlled in such a manner that the correction lens 110 is shifted within a plane perpendicular to the optical axis based on the optical image stabilization amount, the tilt correction amount for the detected tilt of the camera module 108 which is obtained from the first correction amount, and the second correction amount. However, control of the position of the correction lens 110 is not limited thereto. In a case where the correction lens 110 is not subjected to the second force that does not vary in its acting direction in the camera coordinate system in accordance with the tilt of the camera module 108, the second correction amount is not required. Therefore, the controller 107 calculates the image stabilization amount based on the result of detection by the vibration detecting sensor 101, and obtains the tilt correction amount for the tilt of the camera module 108 detected by the tilt detecting sensor 102 based on a difference between the detected tilt of the camera module 108 and the standard tilt, and the first correction amount. The controller 107 controls the position of the correction lens 110 included in the optical system 109 in such a manner that the correction lens 110 is shifted within a plane perpendicular to the optical axis based on the image stabilization amount and the tilt correction amount.

Second Embodiment

In the present embodiment, it is assumed that a correction lens 21 included in an optical system is subjected to the first force and the second force. In the first force, its acting direction in a camera coordinate system varies in accordance with a tilt of a camera. It is assumed that the first force is gravity in the present embodiment. The correction lens 21 is displaced in the direction of gravity by gravity. In the second force, its acting direction in the camera coordinate system does not vary in accordance with the tilt of the camera. In the present embodiment, the second force is a force applied by a suspension 20 for supporting the correction lens 21. The supporting force applied by the suspension is different between portions of the correction lens 21 (hereinafter, referred to as imbalance of suspension). Because of this, the correction lens 21 is displaced.

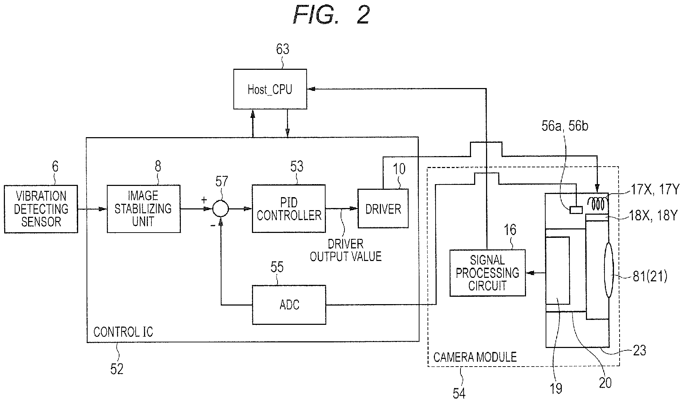

FIG. 2 illustrates a configuration of a camera system of the first reference example.

This camera system controls the position of the correction lens 21 by closed-loop control. A subtractor 57 in a control IC 52 detects a deviation between an image stabilization amount from an image stabilizing unit 8 and the position of the correction lens 21 detected by position detecting elements 56a and 56b in a camera module 54. A PID (proportional-integral-differential) control unit 53 performs PID control for the position of the correction lens 21 based on the deviation output from the subtractor 57.

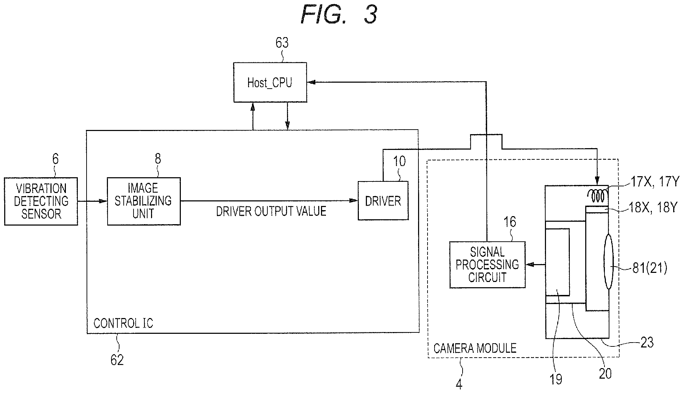

FIG. 3 illustrates a configuration of a camera system of the second reference example.

This camera system controls the position of the correction lens 21 by open-loop control. This camera system does not include a position detecting element. Therefore, a control IC 62 does not include an ADC 55, the subtractor 57, and the PID 53. In open-loop control, the position of the correction lens 21 is controlled without detecting the position of the correction lens 21.

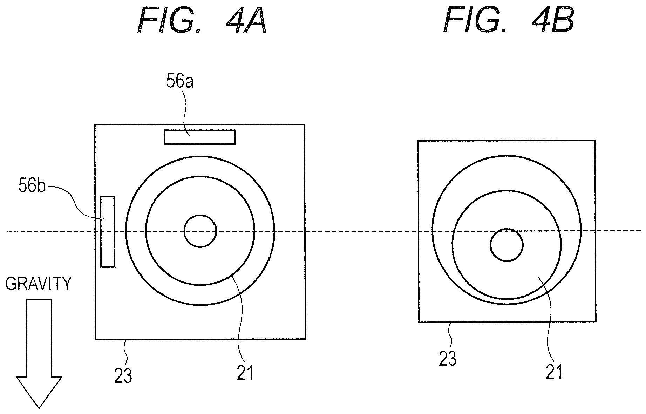

FIG. 4A illustrates the position of the correction lens 21 in the camera system of the first reference example when image stabilization is not performed.

The correction lens 21 is subjected to the force in a direction of gravity, thereby being displaced. The correction lens 21 is also displaced by imbalance of suspension. It is possible to adjust the position of the correction lens 21 at a center position by detecting the position of the correction lens 21 by the position detecting elements 56a and 56b and performing closed-loop control.

FIG. 4B illustrates the position of the correction lens 21 in the camera system of the second reference example when image stabilization is not performed.

In open-loop control, it is impossible to detect the position of the correction lens 21. Therefore, it is impossible to adjust the position of the correction lens 21 at the center position.

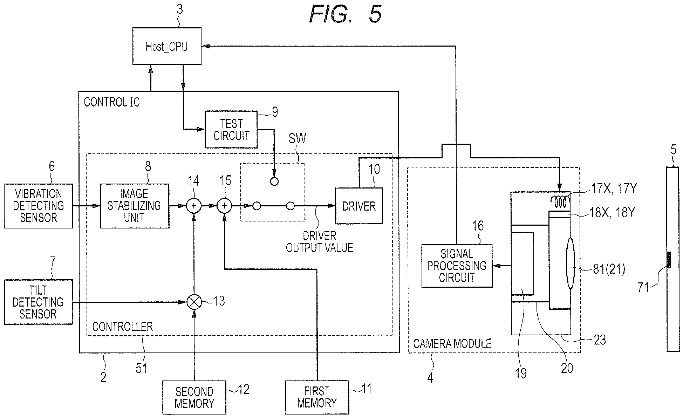

FIG. 5 illustrates a configuration of a camera system according to the second embodiment. The camera system of the present embodiment also controls the position of the correction lens 21 by open-loop control.

As illustrated in FIG. 5, the camera system includes a vibration detecting sensor 6, a tilt detecting sensor 7, a control IC 2, a cameral module 4, and a Host_CPU 3. This camera system is mounted in a digital camera, a camera of a smartphone, or the like.

The vibration detecting sensor 6 is formed by a gyro sensor, for example. The vibration detecting sensor 6 detects vibration of the camera module 4.

The tilt detecting sensor 7 is formed by an acceleration sensor, for example. The tilt detecting sensor 7 detects a tilt of the camera module 4.

The camera module 4 includes coils 17X and 17Y, magnets 18X and 18Y, an optical system 81, an image sensor 19, and a signal processing circuit 16.

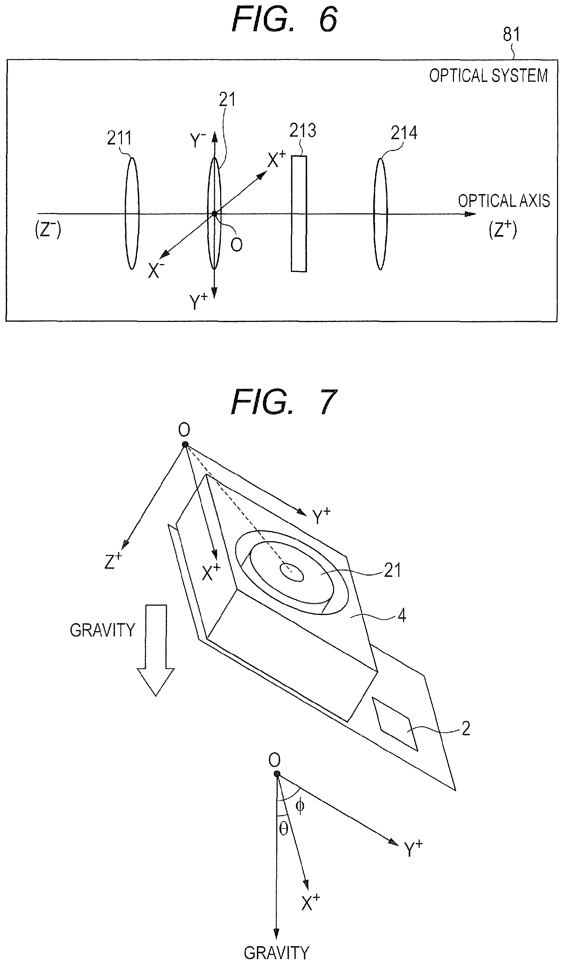

FIG. 6 illustrates the configuration of the optical system 81.

The optical system 81 includes a zoom lens 211, the correction lens 21, a diaphragm 213, and a focus lens 214. The zoom lens 211 changes a magnification of an object image. The correction lens 21 corrects motion of the object image. The correction lens 21 moves toward a direction in which motion of the camera module 4 is canceled, thereby reducing the motion of the object image on the image sensor 19. The diaphragm 213 adjusts the amount of light passing through the optical system 81. The focus lens 214 changes a focusing state of the object image formed on the image sensor 19.

FIG. 6 illustrates the configuration of the optical system 81.

As illustrated in FIG. 6, Z-axis of the camera coordinate system is set along an optical axis. A positive direction along Z-axis, $Z^+$, is set as a traveling direction of light on the optical axis, and a negative direction along Z-axis, $Z^-$, is set as an opposite direction to the traveling direction of the light on the optical axis. An intersection between the correction lens 21 and the optical axis when the correction lens 21 is not subjected to the first force and imbalance by the second force, is set to the origin of the camera coordinate system. X-axis (a positive direction and a negative direction are represented as $X^+$ and $X^-$, respectively) and Y-axis (a positive direction and a negative direction are represented as $Y^+$ and $Y^-$, respectively) of the camera coordinate system are set to be perpendicular to the optical axis. The correction lens 21 is driven within a plane perpendicular to the optical axis of the optical system 81 (i.e., an X-Y plane).

The image sensor 19 performs photoelectric conversion for light incident thereon via the optical system 81 to generate a captured image. The image sensor 19 is a CMOS (Complementary Metal Oxide Semiconductor) image sensor, for example. The CMOS image sensor includes a plurality of unit pixels arranged two-dimensionally. Each unit pixel includes a photodiode, a transfer gate that transfers charges accumulated in the photodiode to an FD (Floating Diffusion), and a reset transistor that resets the charges in the FD. The image sensor 19 outputs image data.

The coils 17X and 17Y, the magnets 18X and 18Y, the optical system 81, and the image sensor 19 are accommodated in a socket 23. The suspension 20 formed by an elastic body is provided in a lens holder of the camera module 4 in order to support the correction lens 21.

The coil 17X and the magnet 18X form the first actuator that drives the correction lens 21 in X-axis direction. The coil 17Y and the magnet 18Y form the second actuator that drives the correction lens 21 in Y-axis direction.

An electromagnetic force is generated by a current flowing through the coil 17X and a magnetic field generated by the magnet 18X, so that the correction lens 21 moves in X-axis direction. When the direction of the current flowing through the coil 17X is reversed, the correction lens 21 moves to an opposite direction to X-axis direction. As the current flowing through the coil 17X becomes larger, the amount of movement of the correction lens 21 in X-axis direction becomes larger.

An electromagnetic force is generated by a current flowing through the coil 17Y and a magnetic field generated by the magnet 18Y, so that the correction lens 21 moves in Y-axis direction. When the direction of the current flowing through the coil 17Y is reversed, the correction lens 21 moves to an opposite direction to Y-axis direction. As the current flowing through the coil 17Y becomes larger, the amount of movement of the correction lens 21 in Y-axis direction becomes larger.

The signal processing circuit 16 performs A/D conversion, amplification, and the like for the image data output from the image sensor 19.

The control IC 2 includes a controller 51, the first memory 11, and the second memory 12. The controller 51 includes a driver 10, a test circuit 9, a switch SW, an image stabilizing unit 8, a tilt correcting unit 13, an adder 14, and an adder 15.

The image stabilizing unit 8 detects a shift of the optical axis in the optical system 81 based on a result of detection by the vibration detecting sensor 6, and calculates a position correction amount of the correction lens 21 in X-axis direction and a position correction amount of the correction lens 21 in Y-axis direction in order to correct the shift. The image stabilizing unit 8 obtains a driver output value TX with regard to X-axis direction, corresponding to the position correction amount of the correction lens 21 in X-axis direction, and a driver output value TY with regard to Y-axis direction, corresponding to the position correction amount of the correction lens 21 in Y-axis direction.

The first memory 11 stores therein, with respect to the first force for a standard tilt of the camera module 4, a driver output value GX with regard to X-direction corresponding to the position correction amount of the correction lens 21 in X-axis direction (hereinafter, an X-axis direction gravity correction amount) and a driver output value GY with regard to Y-axis direction corresponding to the position correction amount of the correction lens 21 in Y-axis direction (hereinafter, a Y-axis direction gravity correction amount).

The second memory 12 stores therein, with respect to the second force, a driver output value MX with regard to X-axis direction corresponding to the position correction amount of the correction lens 21 in X-axis direction (hereinafter, an X-axis direction suspension-imbalance correction amount) and a driver output value MY with regard to Y-axis direction corresponding to the position correction amount of the correction lens 21 in Y-axis direction (hereinafter, a Y-axis direction suspension-imbalance correction amount).

The tilt correcting unit 13 calculates a driver output value GX' with regard to X-axis direction, corresponding to the position correction amount of the correction lens 21 in X-axis direction with respect to the first force for the detected tilt of the camera module 4 based on the tilt of the camera module 4 detected by the tilt detecting sensor 7, and the driver output values GX and GY stored in the first memory 11. The tilt correcting unit 13 further calculates a driver output value GY' with regard to Y-axis direction corresponding to the position correction amount of the correction lens 21 in Y-axis direction.

FIG. 7 illustrates an example of the tilt of the camera module 4.

When an angle formed by gravity that is the first force and the positive direction along X-axis ($X^+$) is $\theta$ and an angle formed by gravity and the positive direction along Y-axis ($Y^+$) is $\phi$, the following expressions are established. $\theta$ and $\phi$ are supplied from the tilt detecting sensor 7 to the tilt correcting unit 13. The tilt of the camera module 4 when $\theta$ and $\phi$ are 0 is the standard tilt of the camera module 4.

$$GX' = GX\cos(\theta) \quad ... \quad (A1)$$

$$GY' = GY\cos(\phi) \quad ... \quad (A2)$$

The adder 14 adds the outputs of the image stabilizing unit 8 (the driver output values TX and TY) and the outputs of the tilt correcting unit 13 (the driver output values GX' and GY').

The adder 15 adds the outputs of the adder 14 (TX + GX' and TY + GY') and the driver output values MX and MY stored in the second memory 12.

The switch SW supplies the outputs of the adder 15 (TX + GX'+ MX and TY + GY' + MY) to the driver 10 in a normal operation. The switch SW supplies the outputs of the test circuit 9 to the driver 10 in calibration of the position of the correction lens 21.

The driver 10 drives the correction lens 21. The driver 10 supplies current to the coils 17X and 17Y based on the output of the switch SW. The driver 10 supplies current corresponding to a driver output value with regard to X-axis direction output from the switch SW, to the coil 17X. The driver 10 supplies current corresponding to a driver output value with regard to Y-axis direction output from the switch SW, to the coil 17Y.

Supply of the current to the coil 17X causes the correction lens 21 to be shifted in X-axis direction by a distance corresponding to the magnitude of the current within a plane perpendicular to the optical axis. Supply of the current to the coil 17Y causes the correction lens 21 to be shifted in Y-axis direction by a distance corresponding to the magnitude of the current within the plane perpendicular to the optical axis.

The test circuit 9 outputs a driver output value to the driver 10 driving the correction lens 21, in accordance with an instruction signal from the Host_CPU 3 in the calibration of the position of the correction lens 21.

The test circuit 9 writes the X-axis direction gravity correction amount GX and the Y-axis direction gravity correction amount GY into the first memory 11 in accordance with a signal from the Host_CPU 3 in the calibration of the position of the correction lens 21. The test circuit 9 writes the X-axis direction suspension-imbalance correction amount MX and the Y-axis direction suspension-imbalance correction amount MY into the second memory 12 in accordance with a signal from the Host_CPU 3 in the calibration of the position of the correction lens 21.

The switch SW couples the test circuit 9 and the driver 10 to each other in the calibration. The switch SW supplies the output of the test circuit 9 to the driver 10 in the calibration. The switch SW couples the adder 15 and the driver 10 to each other in a normal operation. The switch SW supplies the outputs of the adder 15 to the driver 10 in the normal operation.

As described above, according to the present embodiment, it is possible to appropriately correct displacement of a correction lens for image stabilization, which is caused by gravity and a force applied by a suspension, by using a correction amount with respect to gravity that is pre-stored and a correction amount with respect to the force applied by the suspension without providing an element that detects the position of the correction lens.

Third Embodiment

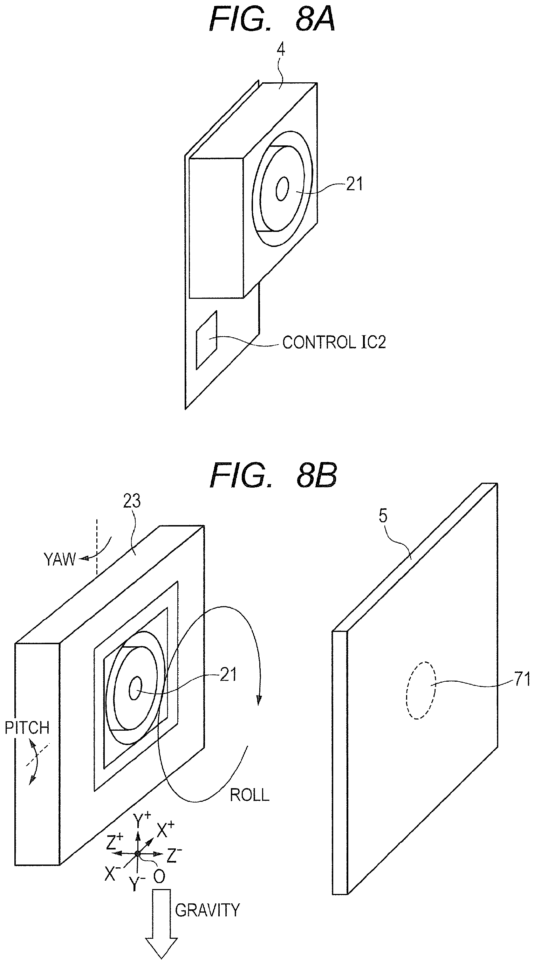

FIG. 8A illustrates the camera module 4. The camera module 4 includes an optical system including the correction lens 21 and the control IC 2 controlling the optical system. FIG. 8B illustrates the positions of the camera module and a chart in calibration of the position of the correction lens 21 in the third embodiment.

As illustrated in FIGS. 8A and 8B, the optical axis of the optical system 81 is set to be perpendicular to the direction of gravity. A chart sheet 5 is provided perpendicularly to the optical axis of the optical system 81 and Z$^-$-direction. A chart 71 is printed on the chart sheet 5. The socket 23 in which the camera module 4 is incorporated is set to be rotatable in a roll direction.

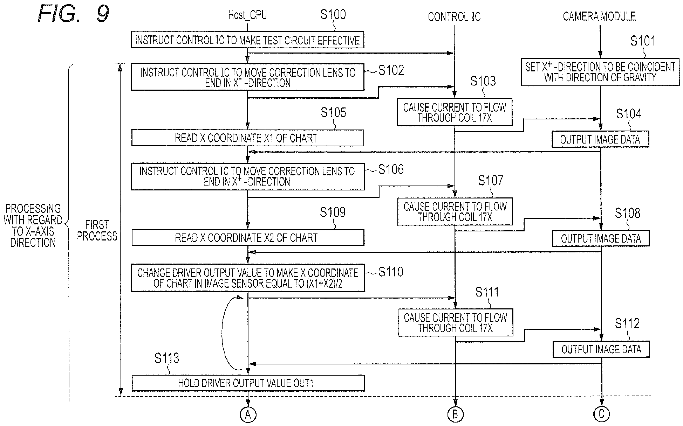

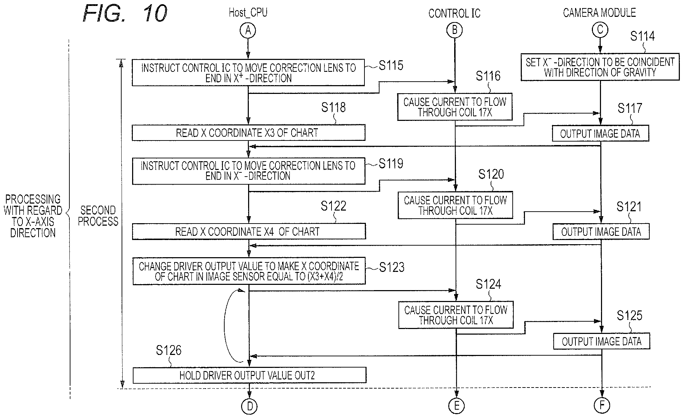

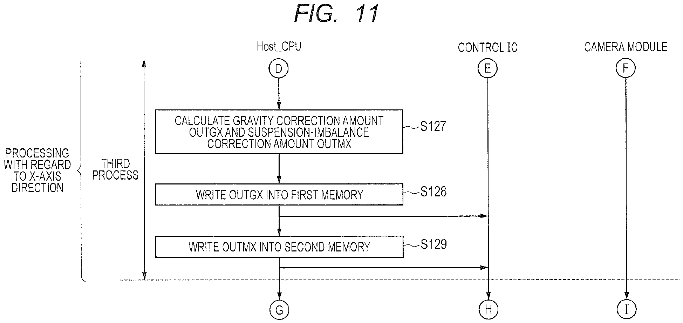

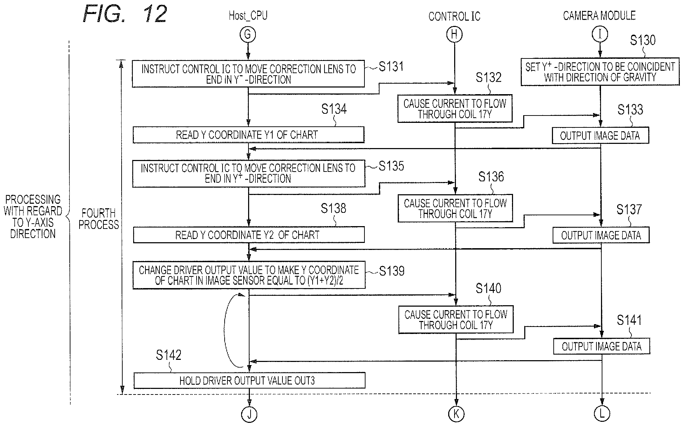

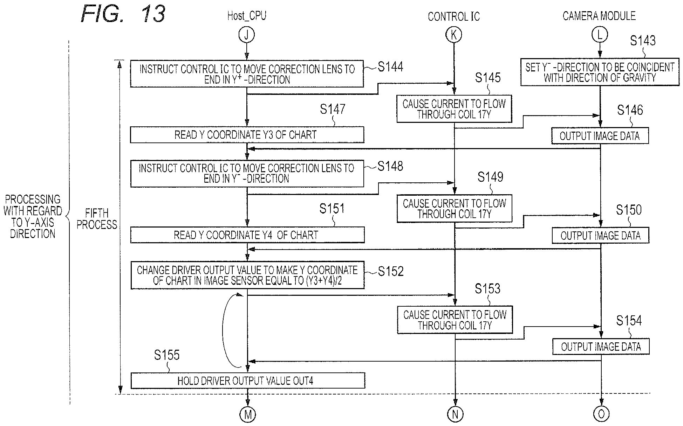

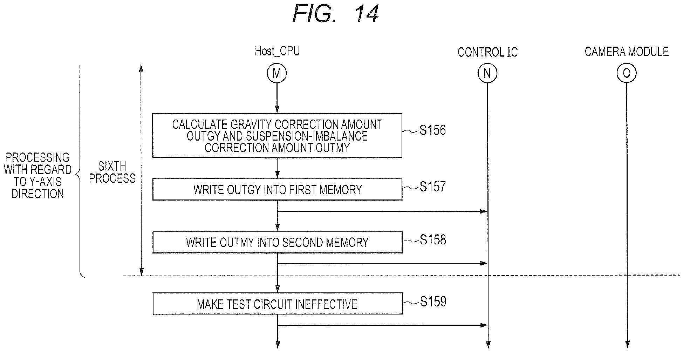

FIGS. 9 to 14 illustrate a procedure of calibration of the position of the correction lens 21 in the third embodiment.

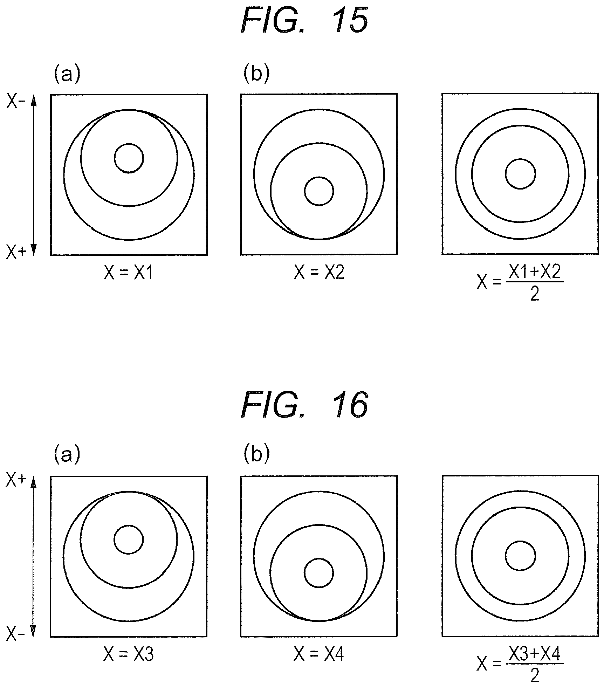

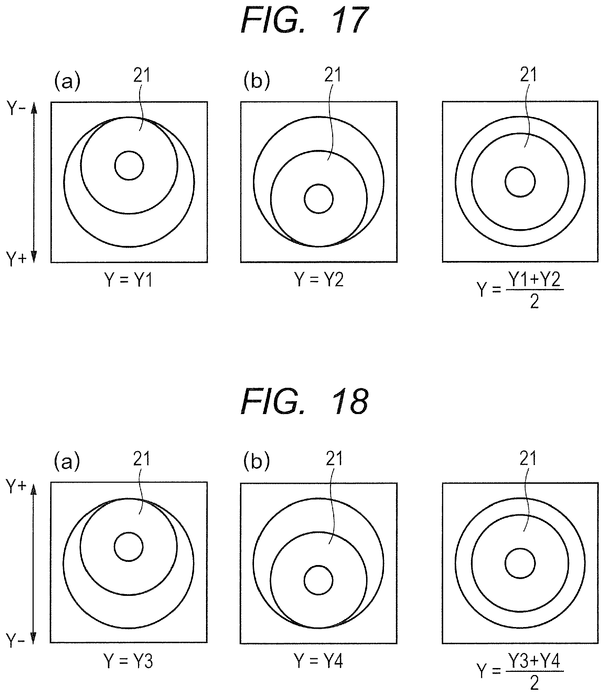

FIGS. 15A, 15B, and 15C explain the positions of the correction lens 21 in the first process of the calibration. FIGS. 16A, 16B, and 16C explain the positions of the correction lens 21 in the second process of the calibration. FIGS. 17A, 17B, and 17C explain the positions of the correction lens 21 in the fourth process of the calibration. FIGS. 18A, 18B, and 18C explain the positions of the correction lens 21 in the firth process of the calibration.

In Step S100, the Host_CPU 3 outputs a signal to the control IC 2, which instructs the control IC 2 to make the test circuit 9 effective. In response to this signal, the control IC 2 makes the test circuit 9 effective. The Host_CPU 3 also controls the switch SW to couple the test circuit 9 and the driver 10 to each other.

In Step S101, the socket 23 of the camera module 4 is set to be tilted in such a manner that $X^+$-direction is coincident with the direction of gravity.

Subsequently, the first process from Step S102 to S113 is performed.

In Step S102, the Host_CPU 3 transmits an instruction value PX for moving the correction lens 21 to an end in $X^-$-direction, to the control IC 2.

In Step S103, the test circuit 9 of the control IC 2 specifies a driver output value IX for moving the correction lens 21 to the end in $X^-$-direction based on the received instruction value PX in accordance with a table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in $X^-$-direction by change of a magnetic field generated from the coil 17X (as illustrated in FIG. 15A).

In Step S104, the image sensor 19 of the camera module 4 captures an image of the chart 71 and outputs image data. A signal processing circuit of the camera module 4 performs signal processing (amplification, noise removal, A/D conversion, and the like) for the image data and transmits resultant data to the Host_CPU 3.

In Step S105, the Host_CPU 3 determines an X coordinate X1 of the chart 71 from the received image data.

In Step S106, the Host_CPU 3 transmits an instruction value PX for moving the correction lens 21 to an end in $X^+$-direction, to the control IC 2.

In Step S107, the test circuit 9 of the control IC 2 specifies a driver output value IX for moving the correction lens 21 to the end in $X^+$-direction based on the received instruction value PX in accordance with the table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in $X^+$-direction by change of the magnetic field generated from the coil 17X (as illustrated in FIG. 15B).

In Step S108, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S109, the Host_CPU 3 determines an X coordinate X2 of the chart 71 from the received image data.

In Step S110, the Host_CPU 3 sequentially changes the instruction value PX to the test circuit 9 in such a manner that the X coordinate of the chart 71 of the image data output from the image sensor 19 of the camera module 4 is (X1 + X2)/2.

In Step S111, the test circuit 9 of the control IC 2 sequentially changes the control signal in such a manner that the driver output value IX is sequentially changed based on the sequentially received instruction value PX in accordance with the table of correspondence between instruction values and driver output values. The driver 10 supplies the driver output value (current) IX represented by the control signal that is changed sequentially, to the coil 17X. The correction lens 21 is sequentially displaced in X-direction by change of the magnetic field generated from the coil 17X (as illustrated in FIG. 15C).

In Step S112, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S113, the Host_CPU 3 holds therein an instruction value OUT1 when the X coordinate of the chart 71 is (X1 + X2)/2, from the received image data.

Subsequently, the second process from Step S114 to S126 is performed.

In Step S114, the socket 23 of the camera module 4 is set to be tilted in such a manner that $X^-$-direction is coincident with the direction of gravity.

In Step S115, the Host_CPU 3 transmits an instruction value PX for moving the correction lens 21 to the end in $X^+$-direction, to the control IC 2.

In Step S116, the test circuit 9 of the control IC 2 specifies a driver output value IX for moving the correction lens 21 to the end in $X^+$-direction based on the received instruction value PX in accordance with the table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in X$^+$-direction by change of the magnetic field generated from the coil 17X (as illustrated in FIG. 16A).

In Step S117, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S118, the Host_CPU 3 determines an X coordinate X3 of the chart 71 from the received image data.

In Step S119, the Host_CPU 3 transmits an instruction value PX for moving the correction lens 21 to the end in X$^-$-direction, to the control IC 2.

In Step S120, the test circuit 9 of the control IC 2 specifies a driver output value IX for moving the correction lens 21 to the end in X$^-$-direction based on the received instruction value PX in accordance with the table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in X$^-$-direction by change of the magnetic field generated from the coil 17X (as illustrated in FIG. 16B).

In Step S121, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S122, the Host_CPU 3 determines an X coordinate X4 of the chart 71 from the received image data.

In Step S123, the Host_CPU 3 sequentially changes the instruction value PX to the test circuit 9 in such a manner that the X coordinate of the chart 71 of the image data output from the image sensor 19 of the camera module 4 is (X3 + X4)/2.

In Step S124, the test circuit 9 of the control IC 2 sequentially changes the control signal in such a manner that the driver output value IX is sequentially changed based on the sequentially received instruction value PX in accordance with the table of correspondence between instruction values and driver output values. The driver 10 supplies the driver output value (current) IX represented by the control signal that is changed sequentially, to the coil 17X. The correction lens 21 is sequentially displaced in X-direction by change of the magnetic field generated from the coil 17X (as illustrated in FIG. 16C).

In Step S125, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S126, the Host_CPU 3 holds therein an instruction value OUT2 when the X coordinate of the chart 71 is (X3 + X4)/2, from the received image data.

Subsequently, the third process from Step S127 to S129 is performed.

In Step S127, the Host_CPU 3 calculates an X-axis direction gravity correction amount OUTGX and an X-axis direction suspension-imbalance correction amount OUTMX based on the instruction values OUT1 and OUT2 held therein. The value OUT1 corrects gravity and imbalance of the suspension 20, and is therefore represented by OUT1 = OUTMX + OUTGX. The value OUT2 corrects gravity and imbalance of the suspension 20, and an effect of gravity is reversed from a state where the value OUT1 is measured because of turning of the socket 23 of the camera module 4 by 180 degrees. Therefore, the value OUT2 is represented by OUT2 = OUTMX - OUTGX. Thus, the X-axis direction gravity correction amount OUTGX and the X-axis direction suspension-imbalance correction amount OUTMX are represented by the following expressions.

$$OUTGX = (OUT1 - OUT2)/2 \ ... \ (A3)$$

$$OUTMX = (OUT1 + OUT2)/2 \ ... \ (A4)$$

In Step S128, the Host_CPU 3 transmits the X-axis direction gravity correction amount OUTGX to the control IC 2. The test circuit 9 of the control IC 2 converts the received X-axis direction gravity correction amount OUTGX to an output value of the driver 10 in accordance with a table of correspondence between instruction values and driver output values, and writes the value GX obtained by conversion into the first memory 11.

In Step S129, the Host_CPU 3 transmits the X-axis direction suspension-imbalance correction amount OUTMX to the control IC 2. The test circuit 9 of the control IC 2 converts the received X-axis direction suspension-imbalance correction amount OUTMX to an output value of the driver 10 in accordance with the table of correspondence between instruction values and driver output values, and writes the value MX obtained by conversion into the second memory 12.

Subsequently, the fourth process from Step S130 to S142 is performed.

In Step S130, the socket 23 of the camera module 4 is set to be tilted in such a manner that $Y^+$-direction is coincident with the direction of gravity.

In Step S131, the Host_CPU 3 transmits an instruction value PY for moving the correction lens 21 to an end in $Y^-$-direction, to the control IC 2.

In Step S132, the test circuit 9 of the control IC 2 specifies a driver output value IY for moving the correction lens 21 to the end in $Y^-$-direction based on the received instruction value PY in accordance with the table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in $Y^-$-direction by change of a magnetic field generated from the coil 17Y (as illustrated in FIG. 17A).

In Step S133, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S134, the Host_CPU 3 determines a Y coordinate Y1 of the chart 71 from the received image data.

In Step S135, the Host_CPU 3 transmits an instruction value PY for moving the correction lens 21 to an end in $Y^+$-direction, to the control IC 2.

In Step S136, the test circuit 9 of the control IC 2 specifies a driver output value IY for moving the correction lens 21 to the end in $Y^+$-direction based on the received instruction value PY in accordance with the table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in $Y^+$-direction by change of the magnetic field generated from the coil 17Y (as illustrated in FIG. 17B).

In Step S137, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S138, the Host_CPU 3 determines a Y coordinate Y2 of the chart 71 from the received image data.

In Step S139, the Host_CPU 3 sequentially changes the instruction value PY to the test circuit 9 in such a manner that the Y coordinate of the chart 71 of the image data output from the image sensor 19 of the camera module 4 is (Y1 + Y2)/2.

In Step S140, the test circuit 9 of the control IC 2 sequentially changes the control signal in such a manner that the driver output value IY is sequentially changed based on the sequentially received instruction value PY in accordance with the table of correspondence between instruction values and driver output values. The driver 10 supplies the driver output value (current) IY represented by the control signal that is changed sequentially, to the coil 17Y. The correction lens 21 is sequentially displaced in Y-direction by change of the magnetic field generated from the coil 17Y (as illustrated in FIG. 17C).

In Step S141, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S142, the Host_CPU 3 holds therein an instruction value OUT3 when the Y coordinate of the chart 71 is (Y1 + Y2)/2, from the received image data.

Subsequently, the fifth process from Step S143 to S155 is performed.

In Step S143, the camera module 4 is set to be tilted in such a manner that $Y^-$-direction is coincident with the direction of gravity.

In Step S144, the Host_CPU 3 transmits an instruction value PY for moving the correction lens 21 to the end in $Y^+$-direction, to the control IC 2.

In Step S145, the test circuit 9 of the control IC 2 specifies a driver output value IY for moving the correction lens 21 to the end in $Y^+$-direction based on the received instruction value PY in accordance with the table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in $Y^+$-direction by change of the magnetic field generated from the coil 17Y (as illustrated in FIG. 18A).

In Step S146, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S147, the Host_CPU 3 determines a Y coordinate Y3 of the chart 71 from the received image data.

In Step S148, the Host_CPU 3 transmits an instruction value PY for moving the correction lens 21 to the end in Y$^-$-direction, to the control IC 2.

In Step S149, the test circuit 9 of the control IC 2 specifies a driver output value IY for moving the correction lens 21 to the end in Y$^-$-direction based on the received instruction value PY in accordance with the table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in Y$^-$-direction by change of the magnetic field generated from the coil 17Y (as illustrated in FIG. 18B).

In Step S150, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S151, the Host_CPU 3 determines a Y coordinate Y4 of the chart 71 from the received image data.

In Step S152, the Host_CPU 3 sequentially changes the instruction value PY to the test circuit 9 in such a manner that the Y coordinate of the chart 71 of the image data output from the image sensor 19 of the camera module 4 is (Y3 + Y4)/2.

In Step S153, the test circuit 9 of the control IC 2 sequentially changes the control signal in such a manner that the driver output value IY is sequentially changed based on the sequentially received instruction value PY in accordance with the table of correspondence between instruction values and driver output values. The driver 10 supplies the driver output value (current) IY represented by the control signal that is changed sequentially, to the coil 17Y. The correction lens 21 is sequentially displaced in Y-direction by change of the magnetic field generated from the coil 17Y (as illustrated in FIG. 18C).

In Step S154, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S155, the Host_CPU 3 holds therein an instruction value OUT4 when the Y coordinate of the chart 71 is (Y3 + Y4) /2, from the received image data.

Subsequently, the sixth process from Step S156 to S159 is performed.

In Step S156, the Host_CPU 3 calculates a Y-axis direction gravity correction amount OUTGY and a Y-axis direction suspension-imbalance correction amount OUTMY based on the instruction values OUT3 and OUT4 held therein. The value OUT3 corrects gravity and imbalance of the suspension 20, and is therefore represented by OUT3 = OUTMY + OUTGY. The value OUT4 corrects gravity and imbalance of the suspension 20, and an effect of gravity is reversed from a state where the value OUT3 is measured because of turning of the socket 23 of the camera module 4 by 180 degrees. Therefore, the value OUT4 is represented by OUT4 = OUTMY - OUTGY. Thus, the Y-axis direction gravity correction amount OUTGY and the Y-axis direction suspension-imbalance correction amount OUTMY are represented by the following expressions.

$$\mathrm{OUTGY} = (\mathrm{OUT3} - \mathrm{OUT4})/2 \ ... \ (\mathrm{A5})$$

$$\mathrm{OUTMY} = (\mathrm{OUT3} + \mathrm{OUT4})/2 \ ... \ (\mathrm{A6})$$

In Step S157, the Host_CPU 3 transmits the Y-axis direction gravity correction amount OUTGY to the control IC 2. The test circuit 9 of the control IC 2 converts the received Y-axis direction gravity correction amount OUTGY to an output value of the driver 10 in accordance with the table of correspondence between instruction values and driver output values, and writes the value GY obtained by conversion into the first memory 11.

In Step S158, the Host_CPU 3 transmits the Y-axis direction suspension-imbalance correction amount OUTMY to the control IC 2. The test circuit 9 of the control IC 2 converts the received Y-axis direction suspension-imbalance correction amount OUTMY to an output value of the driver 10 in accordance with the table of correspondence between instruction values and driver output values, and writes the value MY obtained by conversion into the second memory 12.

In Step S159, the Host_CPU 3 outputs a signal to the control IC 2, which instructs the control IC 2 to make the test circuit 9 ineffective. In response to this signal, the control IC 2 makes the test circuit 9 ineffective. The Host_CPU 3 also controls the switch SW to couple the adder 15 and the driver 10 to each other.

The Host_CPU 3 may transmit the values OUT1 to OUT4 to the control IC 2 and the test circuit 9 of the control IC 2 may calculate the values OUTGX, OUTMX, OUTGY, and OUTMY from the values OUT1 to OUT4.

As described above, according to the present embodiment, it is possible to write correction amounts for correcting displacement of a correction lens that is caused by gravity and imbalance of suspension, into first and second memories. Thus, it is possible to appropriately control the position of the correction lens during image stabilization, by using these correction amounts in an actual operation (a normal operation) of a camera module.

Fourth Embodiment

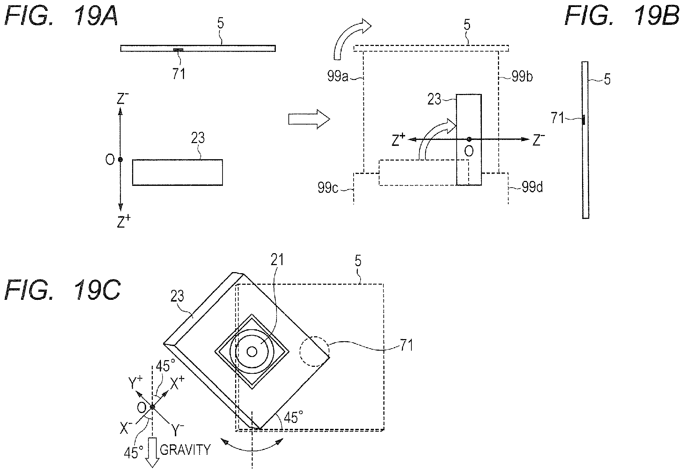

FIGS. 19A, 19B, and 19C illustrate the positions of the camera module 4 and the chart 71 in calibration of the position of the correction lens 21 according to the fourth embodiment.

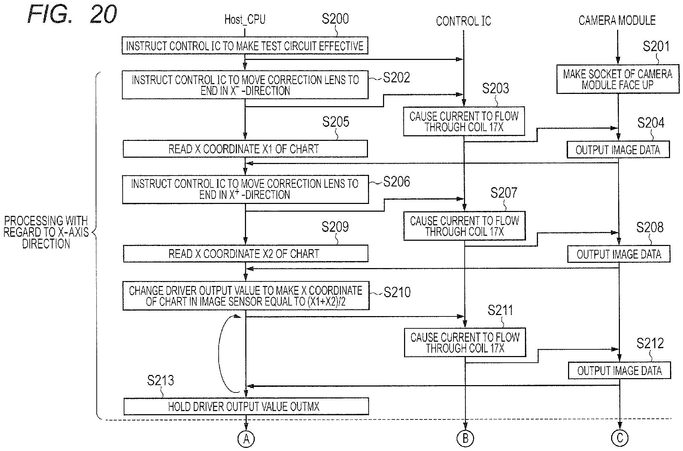

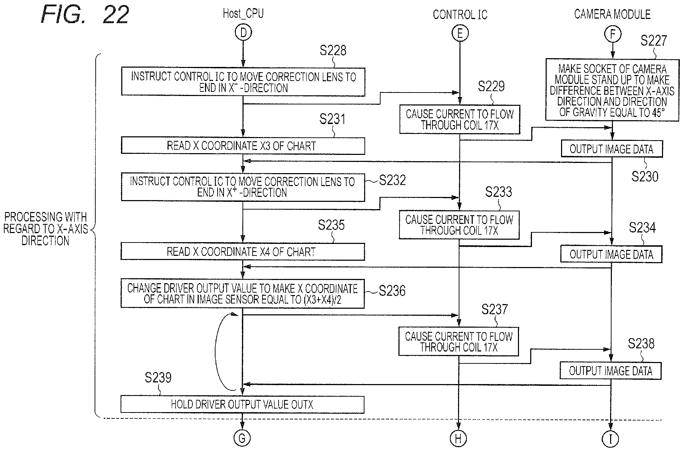

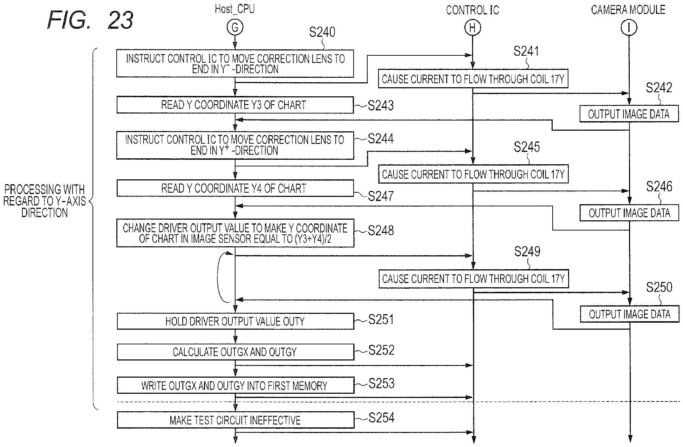

FIGS. 20 to 23 illustrate a procedure of the calibration of the position of the correction lens 21 in the fourth embodiment.

In Step S200, the Host_CPU 3 outputs a signal to the control IC 2, which instructs the control IC 2 to make the test circuit 9 effective. In response to this signal, the control IC 2 makes the test circuit 9 effective. The Host_CPU 3 also controls the switch SW to couple the test circuit 9 and the driver 10 to each other.

In Step S201, the socket 23 in which the camera module 4 is incorporated is set to be tilted to face up, that is, in such a manner that $Z^+$-direction is coincident with the direction of gravity. The chart sheet 5 is arranged perpendicularly to Z-axis to be away from the socket 23 of the camera module 4 by a predetermined distance in $Z^-$-direction (as illustrated in FIG. 19A).

In Step S202, the Host_CPU 3 transmits an instruction value PX for moving the correction lens 21 to an end in $X^-$-direction, to the control IC 2.

In Step S203, the test circuit 9 of the control IC 2 specifies a driver output value IX for moving the correction lens 21 to the end in $X^-$-direction based on the received instruction value PX in accordance with a table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in $X^-$-direction by change of a magnetic field generated from the coil 17X.

In Step S204, the image sensor 19 of the camera module 4 captures an image of the chart 71 and outputs image data. A signal processing circuit of the camera module 4 performs signal processing (amplification, noise removal, A/D conversion, and the like) for the image data and transmits resultant data to the Host_CPU 3.

In Step S205, the Host_CPU 3 determines an X coordinate X1 of the chart 71 from the received image data.

In Step S206, the Host_CPU 3 transmits an instruction value PX for moving the correction lens 21 to an end in $X^+$-direction, to the control IC 2.

In Step S207, the test circuit 9 of the control IC 2 specifies a driver output value IX for moving the correction lens 21 to the end in $X^+$-direction based on the received instruction value PX in accordance with the table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in $X^+$-direction by change of the magnetic field generated from the coil 17X.

In Step S208, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S209, the Host_CPU 3 determines an X coordinate X2 of the chart 71 from the received image data.

In Step S210, the Host_CPU 3 sequentially changes the instruction value PX to the test circuit 9 in such a manner that the X coordinate of the chart 71 of the image data output from the image sensor 19 of the camera module 4 is (X1 + X2)/2.

In Step S211, the test circuit 9 of the control IC 2 sequentially changes the control signal in such a manner that the driver output value IX is sequentially changed based on the sequentially received instruction value PX in accordance with the table of correspondence between instruction values and driver output values. The driver 10 supplies the driver output value (current) IX represented by the control signal that is changed sequentially, to the coil 17X. The correction lens 21 is sequentially displaced in X-direction by change of the magnetic field generated from the coil 17X.

In Step S212, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S213, the Host_CPU 3 holds therein an instruction value OUTMX when the X coordinate of the chart 71 is (X1 + X2)/2, from the received image data.

In Step S214, the Host_CPU 3 transmits an instruction value PY for moving the correction lens 21 to an end in $Y^-$-direction, to the control IC 2.

In Step S215, the test circuit 9 of the control IC 2 specifies a driver output value IY for moving the correction lens 21 to the end in Y⁻-direction based on the received instruction value PY in accordance with a table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in Y⁻-direction by change of a magnetic field generated from the coil 17Y.

In Step S216, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S217, the Host_CPU 3 determines a Y coordinate Y1 of the chart 71 from the received image data.

In Step S218, the Host_CPU 3 transmits an instruction value PY for moving the correction lens 21 to an end in Y⁺-direction, to the control IC 2.

In Step S219, the test circuit 9 of the control IC 2 specifies a driver output value IY for moving the correction lens 21 to the end in Y⁺-direction based on the received instruction value PY in accordance with the table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in Y⁺-direction by change of the magnetic field generated from the coil 17Y.

In Step S220, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S221, the Host_CPU 3 determines a Y coordinate Y2 of the chart 71 from the received image data.

In Step S222, the Host_CPU 3 sequentially changes the instruction value PY to the test circuit 9 in such a manner that the Y coordinate of the chart 71 of the image data output from the image sensor 19 of the camera module 4 is (Y1 + Y2)/2.

In Step S223, the test circuit 9 of the control IC 2 sequentially changes the control signal in such a manner that the driver output value IY is sequentially changed based on the sequentially received instruction value PY in accordance with the table of correspondence between instruction values and driver output values. The driver 10 supplies the driver output value (current) IY represented by the control signal that is changed sequentially, to the coil 17Y. The correction lens 21 is sequentially displaced in Y-direction by change of the magnetic field generated from the coil 17Y.

In Step S224, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S225, the Host_CPU 3 holds therein an instruction value OUTMY when the Y coordinate of the chart 71 is (Y1 + Y2)/2, from the received image data.

In Step S226, because gravity does not act in X-axis direction and Y-axis direction, the values OUTMX and OUTMY are suspension-imbalance correction amounts for correcting an effect of imbalance of the suspension 20. Therefore, the Host_CPU 3 transmits the X-axis direction suspension-imbalance correction amount OUTMX and the Y-axis direction suspension-imbalance correction amount OUTMY to the control IC 2. The test circuit 9 of the control IC 2 converts the received X-axis direction suspension-imbalance correction amount OUTMX and the received Y-axis direction suspension-imbalance correction amount OUTMY to output values of the driver 10 in accordance with a table of correspondence between instruction values and driver output values, and writes values MX and MY obtained by conversion into the second memory 12.

In Step S227, the socket 23 is set to be tilted to stand up, that is, in such a manner that a difference between X⁻-direction and Y⁻-direction, and the direction of gravity is 45 degrees. The chart sheet 5 is arranged perpendicularly to Z-axis to be away from the socket 23 of the camera module 4 by a predetermined distance in Z⁻-direction (as illustrated in FIGS. 19B and 19C).

In Step S228, the Host_CPU 3 transmits an instruction value PX for moving the correction lens 21 to the end in X⁻-direction, to the control IC 2.

In Step S229, the test circuit 9 of the control IC 2 specifies a driver output value IX for moving the correction lens 21 to the end in X⁻-direction based on the received instruction value PX in accordance with the table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in X⁻-direction by change of the magnetic field generated from the coil 17X.

In Step S230, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S231, the Host_CPU 3 determines an X coordinate X3 of the chart 71 from the received image data.

In Step S232, the Host_CPU 3 transmits an instruction value PX for moving the correction lens 21 to the end in $X^+$-direction, to the control IC 2.

In Step S233, the test circuit 9 of the control IC 2 specifies a driver output value IX for moving the correction lens 21 to the end in $X^+$-direction based on the received instruction value PX in accordance with the table of correspondence between instruction values and driver output values, and transmits a control signal representing the specified driver output value IX to the driver 10. The driver 10 supplies the driver output value (current) IX represented by the control signal to the coil 17X. The correction lens 21 is displaced in $X^+$-direction by change of the magnetic field generated from the coil 17X.

In Step S234, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S235, the Host_CPU 3 determines an X coordinate X4 of the chart 71 from the received image data.

In Step S236, the Host_CPU 3 sequentially changes the instruction value PX to the test circuit 9 in such a manner that the X coordinate of the chart 71 of the image data output from the image sensor 19 of the camera module 4 is (X3 + X4)/2.

In Step S237, the test circuit 9 of the control IC 2 sequentially changes the control signal in such a manner that the driver output value IX is sequentially changed based on the sequentially received instruction value PX in accordance with the table of correspondence between instruction values and driver output values. The driver 10 supplies the driver output value (current) IX represented by the control signal that is changed sequentially, to the coil 17X. The correction lens 21 is sequentially displaced in X-direction by change of the magnetic field generated from the coil 17X.

In Step S238, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S239, the Host_CPU 3 holds therein an instruction value OUTX when the X coordinate of the chart 71 is (X3 + X4)/2, from the received image data.

In Step S240, the Host_CPU 3 transmits an instruction value PY for moving the correction lens 21 to the end in $Y^-$-direction, to the control IC 2.

In Step S241, the test circuit 9 of the control IC 2 specifies a driver output value IY for moving the correction lens 21 to the end in $Y^-$-direction based on the received instruction value PY in accordance with the table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in $Y^-$-direction by change of the magnetic field generated from the coil 17Y.

In Step S242, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S243, the Host_CPU 3 determines a Y coordinate Y3 of the chart 71 from the received image data.

In Step S244, the Host_CPU 3 transmits an instruction value PY for moving the correction lens 21 to the end in $Y^+$-direction, to the control IC 2.

In Step S245, the test circuit 9 of the control IC 2 specifies a driver output value IY for moving the correction lens 21 to the end in $Y^+$-direction based on the received instruction value PY in accordance with the table of correspondence between instruction values and driver output values, and transmits a control signal representing the specified driver output value IY to the driver 10. The driver 10 supplies the driver output value (current) IY represented by the control signal to the coil 17Y. The correction lens 21 is displaced in $Y^+$-direction by change of the magnetic field generated from the coil 17Y.

In Step S246, the image sensor 19 of the camera module 4 captures an image of the chart 71 and outputs image data. The signal processing circuit of the camera module 4 performs signal processing (amplification, noise removal, A/D conversion, and the like) for the image data and transmits resultant data to the Host_CPU 3.

In Step S247, the Host_CPU 3 determines a Y coordinate Y4 of the chart 71 from the received image data.

In Step S248, the Host_CPU 3 sequentially changes the instruction value PY to the test circuit 9 in such a manner that the Y coordinate of the chart 71 of the image data output from the image sensor 19 of the camera module 4 is (Y3 + Y4) /2.

In Step S249, the test circuit 9 of the control IC 2 sequentially changes the control signal in such a manner that the driver output value IY is sequentially changed based on the sequentially received instruction value PY in accordance with the table of correspondence between instruction values and driver output values. The driver 10 supplies the driver output value (current) IY represented by the control signal that is changed sequentially, to the coil 17Y. The correction lens 21 is sequentially displaced in Y-direction by change of the magnetic field generated from the coil 17Y.

In Step S250, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S251, the Host_CPU 3 holds therein an instruction value OUTY when the Y coordinate of the chart 71 is (Y3 + Y4)/2, from the received image data.

In Step S252, the Host_CPU 3 calculates values OUTGX and OUTGY from the values OUTX, OUTY, OUTMX, and OUTMY in accordance with the following expressions.

$$OUTGX = \sqrt{2} * (OUTX - OUTMX) \ldots (A7)$$

$$OUTGY = \sqrt{2} * (OUTY - OUTMY) \ldots (A8)$$

In Step S253, the Host_CPU 3 transmits the X-axis direction gravity correction amount OUTGX and the Y-axis direction gravity correction amount OUTGY to the control IC 2. The test circuit 9 of the control IC 2 converts the received X-axis direction gravity correction amount OUTGX and the received Y-axis direction gravity correction amount OUTGY to output values of the driver 10 in accordance with the table of correspondence between instruction values and driver output values, and writes values GX and GY obtained by conversion into the first memory 11.

In Step S254, the Host_CPU 3 outputs a signal to the control IC 2, which instructs the control IC 2 to make the test circuit 9 ineffective. In response to this signal, the control IC 2 makes the test circuit 9 ineffective. The Host_CPU 3 also controls the switch SW to couple the adder 15 and the driver 10 to each other.

As described above, according to the present embodiment, it is possible to write correction amounts for correcting displacement of a correction lens that is caused by gravity and imbalance of suspension, into first and second memories, as in the third embodiment. Thus, it is possible to appropriately control the position of the correction lens during image stabilization, by using these correction amounts in an actual operation (a normal operation) of a camera module.

Fifth Embodiment

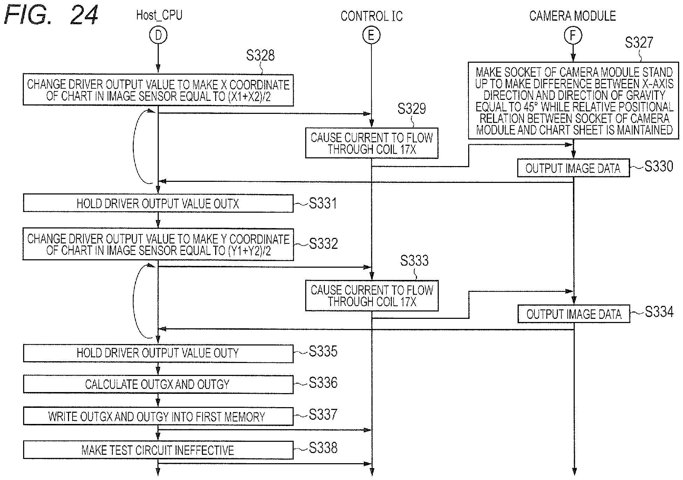

FIG. 24 illustrates a portion of a procedure of calibration of the position of the correction lens 21 according to the fifth embodiment.

Steps S201 to S226 in the fourth embodiment are also performed in the present embodiment. Subsequent processes in the present embodiment are different from those in the fourth embodiment. The different processes are described below.

In Step S327, fixing members 99a, 99b, and 99c are attached between the camera module 4 and the chart sheet 5 in order to maintain a relative positional relation between the camera module 4 and the chart sheet 5, and the camera module 4 is turned forward by 90 degrees and is then turned in a transverse direction by 45 degrees. Due to this, the camera module 4 is set to be tilted in such a manner that, while the relative positional relation between the camera module 4 and the chart sheet 5 is maintained, a difference between X⁻-direction and Y⁻-direction of the camera module 4 and the direction of gravity is 45 degrees. Thus, the processes of obtaining the values X3, X4, Y3, and Y4 can be omitted (illustrated in FIG. 19B).

In Step S328, the Host_CPU 3 sequentially changes the instruction value PX to the test circuit 9 in such a manner that the X coordinate of the chart 71 of the image data output from the image sensor 19 of the camera module 4 is (X1 + X2)/2. Here, X1 is the value obtained in Step S205 in FIG. 20, and X2 is the value obtained in Step S209 in FIG. 20.

In Step S329, the test circuit 9 of the control IC 2 sequentially changes the control signal in such a manner that the driver output value IX is sequentially changed based on the sequentially received instruction value PX in accordance with the table of correspondence between instruction values and driver output values. The driver 10 supplies the driver output value (current) IX represented by the control signal that is changed sequentially, to the coil 17X. The correction lens 21 is sequentially displaced in X-direction by change of the magnetic field generated from the coil 17X.

In Step S330, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S331, the Host_CPU 3 holds therein an instruction value OUTX when the X coordinate of the chart 71 is (X1 + X2)/2, from the received image data.

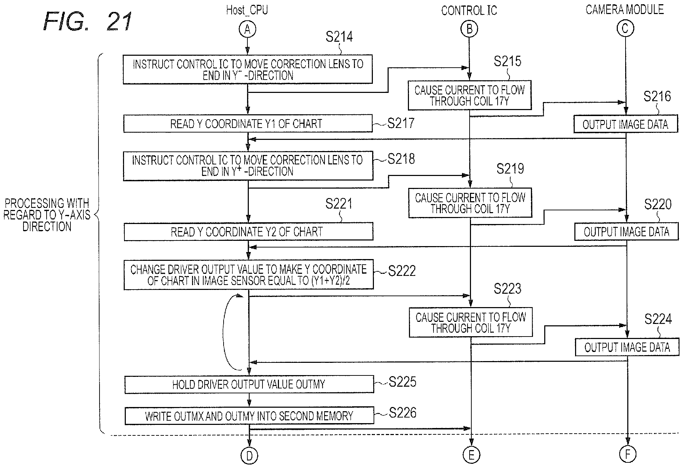

In Step S332, the Host_CPU 3 sequentially changes the instruction value PY to the test circuit 9 in such a manner that the Y coordinate of the chart 71 of the image data output from the image sensor 19 of the camera module 4 is (Y1 + Y2)/2. Here, Y1 is the value obtained in Step S217 in FIG. 21, and Y2 is the value obtained in Step S221 in FIG. 21.

In Step S333, the test circuit 9 of the control IC 2 sequentially changes the control signal in such a manner that the driver output value IY is sequentially changed based on the sequentially received instruction value PY in accordance with the table of correspondence between instruction values and driver output values. The driver 10 supplies the driver output value (current) IY represented by the control signal that is changed sequentially, to the coil 17Y. The correction lens 21 is sequentially displaced in Y-direction by change of the magnetic field generated from the coil 17Y.

In Step S334, the image sensor 19 of the camera module 4 sequentially captures an image of the chart 71 and sequentially outputs image data. The signal processing circuit of the camera module 4 performs signal processing (amplification, noise removal, A/D conversion, and the like) for the sequentially generated image data and transmits resultant data to the Host_CPU 3.

In Step S335, the Host_CPU 3 holds therein an instruction value OUTY when the Y coordinate of the chart 71 is (Y1 + Y2)/2, from the received image data.

In Step S336, the Host_CPU 3 calculates values OUTGX and OUTGY from the values OUTX, OUTY, OUTMX, and OUTMY. The values OUTX and OUTY correct gravity and imbalance of the suspension 20 when X-axis direction and Y-axis direction are away from the direction of gravity by 45 degrees. Therefore, the Host_CPU 3 calculates the following expressions.

$$\overline{\text{OUTGX}} = \sqrt{2} \ * \ (\text{OUTX} - \text{OUTMX}) \ ... \ (\text{A9})$$

$$\text{OUTGY} = \sqrt{2} \ * \ (\text{OUTY} - \text{OUTMY}) \ ... \ (\text{A10})$$

In Step S337, the Host_CPU 3 transmits the X-axis direction gravity correction amount OUTGX and the Y-axis direction gravity correction amount OUTGY to the control IC 2. The test circuit 9 of the control IC 2 converts the received X-axis direction gravity correction amount OUTGX and the received Y-axis direction gravity correction amount OUTGY to output values of the driver 10 in accordance with the table of correspondence between instruction values and driver output values, and writes values GX and GY obtained by conversion into the first memory 11.

In Step S338, the Host_CPU 3 outputs a signal to the control IC 2, which instructs the control IC 2 to make the test circuit 9 ineffective. In response to this signal, the control IC 2 makes the test circuit 9 ineffective. The Host_CPU 3 also controls the switch SW to couple the adder 15 and the driver 10 to each other.

As described above, according to the present embodiment, it is possible to write correction amounts for correcting displacement of a correction lens that is caused by gravity and imbalance of suspension into first and second memories, as in the third and fourth embodiments. Thus, it is possible to appropriately control the position of the correction lens during image stabilization, by using these correction amounts in an actual operation (a normal operation) of a camera module.

In the above, the invention made by the inventors of the present application has been specifically described by way of the embodiments. However, it is naturally understood that the present invention is not limited to the embodiments, and can be changed in various ways within the scope not departing from the gist thereof.

**Claims**

**1.** A camera controller controlling image stabilization of a camera module, comprising:

a first storage unit that stores therein a first correction amount for a standard tilt of the camera module, with respect to a first force that varies in an acting direction in a camera coordinate system in accordance with a tilt of the camera module; and
a controller that calculates an image stabilization amount based on a result of detection by a vibration detecting sensor, obtains a tilt correction amount for a tilt of the camera module detected by a tilt detecting sensor based on a difference between the detected tilt and the standard tilt, and the first correction amount, and controls a position of a correction lens included within an optical system in such a manner the correction lens is shifted in a plane perpendicular to an optical axis based on the image stabilization amount and the tilt correction amount.

**2.** The camera controller according to Claim 1, further comprising a second storage unit that stores therein a second correction amount with respect to a second force that does not vary in an acting direction in the camera coordinate system in accordance with the tilt of the camera module,

wherein the controller controls the position of the correction lens included in the optical system in such a manner that the correction lens is shifted within the plane perpendicular to the optical axis based on the image stabilization amount, the tilt correction amount, and the second correction amount.

3. The camera controller according to Claim 2,
wherein the controller controls the position of the correction lens based on an addition correction amount obtained by adding the image stabilization amount, the tilt correction amount for the detected tilt of the camera module, and the second correction amount.

4. The camera controller according to Claim 2,
wherein the first force is gravity, and the correction lens is displaced in a direction of gravity, and
wherein the second force is a force applied by a suspension for supporting the correction lens, and the correction lens is displaced because of a difference of the force for supporting the correction lens by the suspension between portions of the correction lens.

5. The camera controller according to one of Claims 1 to 4,
wherein the controller includes
a driver for driving the correction lens,
a test circuit that outputs a driver output value to the driver for driving the correction lens, in accordance with an instruction signal from a host CPU in calibration of the position of the correction lens, and
a switch that supplies an output of the test circuit to the driver in the calibration and supplies the addition correction amount to the driver in a normal operation, and
Wherein preferably, in the calibration of the position of the correction lens, the test circuit writes the first correction amount into the first storage unit in accordance with a signal from the host CPU, and writes the second correction amount into the second storage unit in accordance with a signal from the host CPU.

6. A calibration method for a correction lens used for image stabilization of a camera module, the correction lens being subjected to a first force and a second force, the first force being a force in which an acting direction thereof in a camera coordinate system varies in accordance with a tilt of the camera module, the second force being a force in which an acting direction thereof in the camera coordinate system does not vary in accordance with the tilt of the camera module, an amount of displacement of the correction lens being changed by an output value of a driver that drives the correction lens, the camera coordinate system including a first axis coincident with an optical axis of an optical system of the camera module, and second and third axes perpendicular to the first axis, the method comprising the steps of:

arranging a sheet including a chart to be parallel to a plane of the camera module which includes the second and third axes and to be away from the camera module by a predetermined distance in a first direction along the first axis;
turning the camera module to make a first direction along the second axis coincident with a direction of the first force;
obtaining a coordinate on the second axis of the chart in an output image of an image sensor when the output value of the driver is set to move the correction lens to an end in the first direction along the second axis, as a first coordinate;
obtaining the coordinate on the second axis of the chart in the output image of the image sensor when the output value of the driver is set to move the correction lens to an end in a second direction along the second axis, as a second coordinate;
setting the output value of the driver when the coordinate on the second axis of the chart in the output image of the image sensor is a middle point of the first coordinate and the second coordinate, to a first driver output value, while the correction lens is moved along the second axis;
turning the camera module to make the second direction along the second axis coincident with the direction of the first force;
obtaining the coordinate on the second axis of the chart in the output image of the image sensor when the output value of the driver is set to move the correction lens to the end in the first direction along the second axis, as a third coordinate;
obtaining the coordinate on the second axis of the chart in the output image of the image sensor when the output value of the driver is set to move the correction lens to the end in the second direction along the second axis, as a fourth coordinate;

setting the output value of the driver when the coordinate on the second axis of the chart in the output image of the image sensor is a middle point of the third coordinate and the fourth coordinate, to a second driver output value, while the correction lens is moved along the second axis; and

calculating a first correction amount that is a correction amount in a direction along the second axis with respect to the first force when the direction of the first force is coincident with the first direction along the second axis, and a second correction amount that is a correction amount in the direction along the second axis with respect to the second force, based on the first and second driver output values,

wherein the calculating step includes the steps of

calculating 1/2 of a sum of the first driver output value and the second driver output value to use a resultant value as the first correction amount, and

calculating 1/2 of a value obtained by subtracting the second driver output value from the first driver output value to use a resultant value as the second correction amount.

7. The calibration method for a correction lens according to Claim 6, further comprising the steps of:

turning the camera module to make a first direction along the third axis coincident with the direction of the first force;

obtaining a coordinate on the third axis of the chart in the output image of the image sensor when the output value of the driver is set to move the correction lens to an end in the first direction along the third axis, as a fifth coordinate;

obtaining the coordinate on the third axis of the chart in the output image of the image sensor when the output value of the driver is set to move the correction lens to an end in a second direction along the third axis, as a sixth coordinate;

setting the output value of the driver when the coordinate on the third axis of the chart in the output image of the image sensor is a middle point of the fifth coordinate and the sixth coordinate, to a third driver output value, while the correction lens is moved along the third axis;

turning the camera module to make the second direction along the third axis coincident with the direction of the first force;

obtaining the coordinate on the third axis of the chart in the output image of the image sensor when the output value of the driver is set to move the correction lens to the end in the first direction along the third axis, as a seventh coordinate;

obtaining the coordinate on the third axis of the chart in the output image of the image sensor when the output value of the driver is set to move the correction lens to the end in the second direction along the third axis, as an eighth coordinate;

setting the output value of the driver when the coordinate on the third axis of the chart in the output image of the image sensor is a middle point of the seventh coordinate and the eighth coordinate, to a fourth driver output value, while the correction lens is moved along the third axis; and

calculating a third correction amount that is a correction amount in a direction along the third axis with respect to the first force when the direction of the first force is coincident with the first direction along the third axis, and a fourth correction amount that is a correction amount in the direction along the third axis with respect to the second force, based on the third and fourth driver output values,

wherein the calculating step includes the steps of

calculating 1/2 of a sum of the third driver output value and the fourth driver output value to use a resultant value as the third correction amount, and

calculating 1/2 of a value obtained by subtracting the fourth driver output value from the third driver output value to use a resultant value as the fourth correction amount.

8. A calibration method for a correction lens used for image stabilization of a camera module, the correction lens being subjected to a first force and a second force, the first force being a force in which an acting direction thereof in a camera coordinate system varies in accordance with a tilt of the camera module, the second force being a force in which an acting direction thereof in the camera coordinate system does not vary in accordance with the tilt of the camera module, an amount of displacement of the correction lens being changed by an output value of a driver that drives the correction lens, the camera coordinate system including a first axis coincident with an optical axis of an optical system of the camera module, and second and third axes perpendicular to the first axis, the method comprising the steps of:

turning the camera module to make a first direction along the first axis coincident with a direction of the first force;

arranging a sheet including a chart to be parallel to a plane of the camera module which includes the second and third axes and to be away from the camera module by a predetermined distance in the first direction along the first axis;

obtaining a coordinate on the second axis of the chart in an output image of an image sensor when the output value of the driver is set to move the correction lens to an end in a first direction along the second axis, as a first coordinate;

obtaining the coordinate on the second axis of the chart in the output image of the image sensor when the output value of the driver is set to move the correction lens to an end in a second direction along the second axis, as a second coordinate, and

setting the output value of the driver when the coordinate on the second axis of the chart in the output image of the image sensor is a middle point of the first coordinate and the second coordinate, to a correction amount in a direction of the second axis with respect to the second force, while the correction lens is moved along the second axis.

9. The calibration method for a correction lens according to Claim 8, further comprising the steps of:

obtaining a coordinate on the third axis of the chart in the output image of the image sensor when the output value of the driver is set to move the correction lens to an end in a first direction along the third axis, as a third coordinate;

obtaining the coordinate on the third axis of the chart in the output image of the image sensor when the output value of the driver is set to move the correction lens to an end in a second direction along the third axis, as a fourth coordinate, and

setting the output value of the driver when the coordinate on the third axis of the chart in the output image of the image sensor is a middle point of the third coordinate and the fourth coordinate, to a correction amount in a direction of the third axis with respect to the second force, while the correction lens is moved along the third axis.

10. The calibration method for a correction lens according to Claim 8 or 9, further comprising the steps of:

turning the camera module in such a manner that the first axis is perpendicular to the direction of the first force and the second direction along the second axis and the direction of the first force form a predetermined angle therebetween;

arranging the sheet including the chart to be parallel to the plane of the camera module which includes the second and third axes and to be away from the camera module by a predetermined distance in the first direction along the first axis;

obtaining the coordinate on the second axis of the chart in the output image of the image sensor when the output value of the driver is set to move the correction lens to the end in the first direction along the second axis, as a fifth coordinate;

obtaining the coordinate on the second axis of the chart in the output image of the image sensor when the output value of the driver is set to move the correction lens to the end in the second direction along the second axis, as a sixth coordinate;

setting the output value of the driver when the coordinate on the second axis of the chart in the output image of the image sensor is a middle point of the fifth coordinate and the sixth coordinate, to a first driver output value, while the correction lens is moved along the second axis, and

calculating a first correction amount that is a correction amount in the direction of the second axis with respect to the first force when the direction of the first force is coincident with the first direction along the second axis, based on the correction amount in the direction of the second axis with respect to the second force and the first driver output value.

11. The calibration method for a correction lens according to one of Claims 8 to 10, further comprising the steps of:

obtaining the coordinate on the third axis of the chart in the output image of the image sensor when the output value of the driver is set to move the correction lens to the end in the first direction along the third axis, as a seventh coordinate;

obtaining the coordinate on the third axis of the chart in the output image of the image sensor when the output value of the driver is set to move the correction lens to the end in the second direction along the third axis, as an eighth coordinate;

setting the output value of the driver when the coordinate on the third axis of the chart in the output image of the image sensor is a middle point of the seventh coordinate and the eighth coordinate, to a second driver output value, while the correction lens is moved along the third axis, and

calculating a second correction amount that is a correction amount in the direction of the third axis with respect to the first force when the direction of the first force is coincident with the first direction along the third axis, based on the correction amount in the direction of the third axis with respect to the second force and the second driver output value.

12. The calibration method for a correction lens according to one of Claims 8 to 10, further comprising the steps of:

turning the camera module in such a manner that the first axis is perpendicular to the direction of the first force and the second direction along the second axis and the direction of the first force form a predetermined angle therebetween, while a relative positional relation between the sheet and the camera module is maintained;

setting the output value of the driver when the coordinate on the second axis of the chart in the output image of the image sensor is a middle point of the first coordinate and the second coordinate, to a third driver output value, while the correction lens is moved along the second axis, and

calculating a correction amount in the direction of the second axis with respect to the first force when the direction of the first force is coincident with the first direction along the second axis, based on the correction amount in the direction of the second axis with respect to the second force and the third driver output value.

13. The calibration method for a correction lens according to one of Claims 8 to 12, further comprising the steps of:

setting the output value of the driver when the coordinate on the third axis of the chart in the output image of the image sensor is a middle point of the third coordinate and the fourth coordinate, to a fourth driver output value, while the correction lens is moved along the third axis, and

calculating a correction amount in the direction of the third axis with respect to the first force when the direction of the first force is coincident with the first direction along the third axis, based on the correction amount in the direction of the third axis with respect to the second force and the fourth driver output value.

14. The calibration method for a correction lens according to one of Claims 8 to 13,
wherein the predetermined angle is 45 degrees,
wherein the step of calculating the first correction amount includes the step of setting a value obtained by subtracting the correction amount in the direction of the second axis with respect to the second force from the first driver output value and multiplying a resultant value by $\sqrt{2}$, to the first correction value, and
wherein the step of calculating the second correction amount includes the step of setting a value obtained by subtracting the correction amount in the direction of the third axis with respect to the second force from the second driver output value and multiplying a resultant value by $\sqrt{2}$, to the second correction value.

15. The calibration method for a correction lens according to one of Claims 8 to 14,
wherein the predetermined angle is 45 degrees,
wherein the step of calculating the first correction amount includes the step of setting a value obtained by subtracting the correction amount in the direction of the second axis with respect to the second force from the first driver output value and multiplying a resultant value by $\sqrt{2}$, to the first correction value, and
wherein the step of calculating the second correction amount includes the step of setting a value obtained by subtracting the correction amount in the direction of the third axis with respect to the second force from the second driver output value and multiplying a resultant value by $\sqrt{2}$, to the second correction value, and
wherein preferably the first force is gravity, and the correction lens is displaced in a direction of gravity, and
wherein preferably the second force is a force applied by a suspension for supporting the correction lens, and the correction lens is displaced because of a difference of the force for supporting the correction lens by the suspension between portions of the correction lens.

## FIG. 1

## FIG. 2

*FIG. 3*

63

Host_CPU

6
VIBRATION
DETECTING
SENSOR

8
IMAGE
STABILIZING
UNIT

DRIVER OUTPUT VALUE

10
DRIVER

CONTROL IC

62

16
SIGNAL
PROCESSING
CIRCUIT

17X, 17Y

18X, 18Y

81(21)

23

CAMERA MODULE

4

19

20

# FIG. 4A

56a

56b

GRAVITY

23

21

# FIG. 4B

23

21

## FIG. 5

# FIG. 6

# FIG. 7

## FIG. 8A

4

21

CONTROL IC2

## FIG. 8B

23

YAW

5

21

PITCH

ROLL

71

Y+
Z+    X+
Z-
X-    Y-   O

GRAVITY

FIG. 9

Host_CPU          S100                CONTROL IC                    CAMERA MODULE

INSTRUCT CONTROL IC TO MAKE TEST CIRCUIT EFFECTIVE

|                                                                    S101
|                                                          SET X⁺-DIRECTION TO BE COINCIDENT
INSTRUCT CONTROL IC TO MOVE CORRECTION LENS TO ⟋S102    WITH DIRECTION OF GRAVITY
END IN X⁻-DIRECTION                    S103

                                      CAUSE CURRENT TO FLOW
                     S105             THROUGH COIL 17X                        S104

READ X COORDINATE X1 OF CHART                          OUTPUT IMAGE DATA

INSTRUCT CONTROL IC TO MOVE CORRECTION LENS TO ⟋S106
END IN X⁺-DIRECTION                    S107

                     S109             CAUSE CURRENT TO FLOW                   S108
                                      THROUGH COIL 17X

READ X COORDINATE X2 OF CHART                          OUTPUT IMAGE DATA

CHANGE DRIVER OUTPUT VALUE TO MAKE X COORDINATE ⟋S110
OF CHART IN IMAGE SENSOR EQUAL TO (X1+X2)/2      S111

PROCESSING                            CAUSE CURRENT TO FLOW                   S112
WITH REGARD  FIRST                    THROUGH COIL 17X
TO X-AXIS    PROCESS
DIRECTION                                              OUTPUT IMAGE DATA

          S113

HOLD DRIVER OUTPUT VALUE OUT1

                     (A)                     (B)                     (C)

*FIG. 10*

Host_CPU

(A)

CONTROL IC

(B)

CAMERA MODULE

(C)

S114

SET X⁻-DIRECTION TO BE COINCIDENT WITH DIRECTION OF GRAVITY

INSTRUCT CONTROL IC TO MOVE CORRECTION LENS TO END IN X⁺-DIRECTION ~S115

S116

CAUSE CURRENT TO FLOW THROUGH COIL 17X

S117

OUTPUT IMAGE DATA

S118

READ X COORDINATE X3 OF CHART

INSTRUCT CONTROL IC TO MOVE CORRECTION LENS TO END IN X⁻-DIRECTION ~S119

S120

CAUSE CURRENT TO FLOW THROUGH COIL 17X

S121

OUTPUT IMAGE DATA

S122

READ X COORDINATE X4 OF CHART

PROCESSING WITH REGARD TO X-AXIS DIRECTION

SECOND PROCESS

CHANGE DRIVER OUTPUT VALUE TO MAKE X COORDINATE OF CHART IN IMAGE SENSOR EQUAL TO (X3+X4)/2 ~S123

S124

CAUSE CURRENT TO FLOW THROUGH COIL 17X

S125

OUTPUT IMAGE DATA

S126

HOLD DRIVER OUTPUT VALUE OUT2

(D)

(E)

(F)

28

## FIG. 11

Host_CPU      CONTROL IC      CAMERA MODULE

(D)      (E)      (F)

PROCESSING
WITH REGARD
TO X-AXIS
DIRECTION

THIRD
PROCESS

| CALCULATE GRAVITY CORRECTION AMOUNT OUTGX AND SUSPENSION-IMBALANCE CORRECTION AMOUNT OUTMX | S127 |

| WRITE OUTGX INTO FIRST MEMORY | S128 |

| WRITE OUTMX INTO SECOND MEMORY | S129 |

(G)      (H)      (I)

*FIG. 12*

Host_CPU           CONTROL IC          CAMERA MODULE

(G)           (H)          (I)    S130

| | | |
|---|---|---|
| INSTRUCT CONTROL IC TO MOVE CORRECTION LENS TO END IN $Y^-$-DIRECTION ~S131 | S132 | SET $Y^+$-DIRECTION TO BE COINCIDENT WITH DIRECTION OF GRAVITY |
| | CAUSE CURRENT TO FLOW THROUGH COIL 17Y | S133 |
| READ Y COORDINATE Y1 OF CHART   S134 | | OUTPUT IMAGE DATA |
| INSTRUCT CONTROL IC TO MOVE CORRECTION LENS TO END IN $Y^+$-DIRECTION ~S135 | S136 | |
| | CAUSE CURRENT TO FLOW THROUGH COIL 17Y | S137 |
| READ Y COORDINATE Y2 OF CHART   S138 | | OUTPUT IMAGE DATA |
| CHANGE DRIVER OUTPUT VALUE TO MAKE Y COORDINATE OF CHART IN IMAGE SENSOR EQUAL TO (Y1+Y2)/2 ~S139 | S140 | |
| | CAUSE CURRENT TO FLOW THROUGH COIL 17Y | S141 |
| S142 | | OUTPUT IMAGE DATA |
| HOLD DRIVER OUTPUT VALUE OUT3 | | |

PROCESSING WITH REGARD TO Y-AXIS DIRECTION

FOURTH PROCESS

(J)           (K)          (L)

*FIG. 13*

Host_CPU
(J)

CONTROL IC
(K)

CAMERA MODULE
(L)

S143

PROCESSING
WITH REGARD
TO Y-AXIS
DIRECTION

FIFTH
PROCESS

| INSTRUCT CONTROL IC TO MOVE CORRECTION LENS TO END IN $Y^+$-DIRECTION | S144 |

S145

| CAUSE CURRENT TO FLOW THROUGH COIL 17Y |

| SET $Y^-$-DIRECTION TO BE COINCIDENT WITH DIRECTION OF GRAVITY |

S146

| OUTPUT IMAGE DATA |

S147

| READ Y COORDINATE Y3 OF CHART |

| INSTRUCT CONTROL IC TO MOVE CORRECTION LENS TO END IN $Y^-$-DIRECTION | S148 |

S149

| CAUSE CURRENT TO FLOW THROUGH COIL 17Y |

S150

| OUTPUT IMAGE DATA |

S151

| READ Y COORDINATE Y4 OF CHART |

| CHANGE DRIVER OUTPUT VALUE TO MAKE Y COORDINATE OF CHART IN IMAGE SENSOR EQUAL TO (Y3+Y4)/2 | S152 |

S153

| CAUSE CURRENT TO FLOW THROUGH COIL 17Y |

S154

| OUTPUT IMAGE DATA |

S155

| HOLD DRIVER OUTPUT VALUE OUT4 |

(M)                    (N)                    (O)

## FIG. 14

Host_CPU      CONTROL IC      CAMERA MODULE

(M)      (N)      (O)

PROCESSING
WITH REGARD
TO Y-AXIS
DIRECTION    SIXTH
PROCESS

| CALCULATE GRAVITY CORRECTION AMOUNT OUTGY AND SUSPENSION-IMBALANCE CORRECTION AMOUNT OUTMY | ~S156 |

| WRITE OUTGY INTO FIRST MEMORY | ~S157 |

| WRITE OUTMY INTO SECOND MEMORY | ~S158 |

| MAKE TEST CIRCUIT INEFFECTIVE | ~S159 |

## FIG. 15

(a)

(b)

X−

X+

X = X1

X = X2

$X = \dfrac{X1+X2}{2}$

## FIG. 16

(a)

(b)

X+

X−

X = X3

X = X4

$X = \dfrac{X3+X4}{2}$

## FIG. 17

(a)  21

Y−

Y+

Y = Y1

(b)  21

Y = Y2

21

$$Y = \frac{Y1+Y2}{2}$$

## FIG. 18

(a)  21

Y+

Y−

Y = Y3

(b)  21

Y = Y4

21

$$Y = \frac{Y3+Y4}{2}$$

FIG. 19A

FIG. 19B

FIG. 19C

*FIG. 20*

Host_CPU          S200                    CONTROL IC              CAMERA MODULE

| INSTRUCT CONTROL IC TO MAKE TEST CIRCUIT EFFECTIVE |

                                                                          S201

                                                            | MAKE SOCKET OF CAMERA |
| INSTRUCT CONTROL IC TO MOVE CORRECTION LENS TO |~S202     | MODULE FACE UP |
| END IN X⁻-DIRECTION |                          S203

                                          | CAUSE CURRENT TO FLOW |
                        S205              | THROUGH COIL 17X |                S204

| READ X COORDINATE X1 OF CHART |                              | OUTPUT IMAGE DATA |

| INSTRUCT CONTROL IC TO MOVE CORRECTION LENS TO |~S206
| END IN X⁺-DIRECTION |                          S207

                        S209              | CAUSE CURRENT TO FLOW |            S208
                                          | THROUGH COIL 17X |

| READ X COORDINATE X2 OF CHART |                              | OUTPUT IMAGE DATA |

PROCESSING WITH
REGARD TO X-AXIS
DIRECTION
| CHANGE DRIVER OUTPUT VALUE TO MAKE X COORDINATE |~S210
| OF CHART IN IMAGE SENSOR EQUAL TO (X1+X2)/2 |
                                                   S211

                                          | CAUSE CURRENT TO FLOW |            S212
                                          | THROUGH COIL 17X |

                                                              | OUTPUT IMAGE DATA |
    S213

| HOLD DRIVER OUTPUT VALUE OUTMX |

          Ⓐ                                    Ⓑ                      Ⓒ

FIG. 21

Host_CPU
(A)

CONTROL IC
(B)

CAMERA MODULE
(C)

S214

INSTRUCT CONTROL IC TO MOVE CORRECTION LENS TO END IN Y⁻ -DIRECTION

S215

CAUSE CURRENT TO FLOW THROUGH COIL 17Y

S216

OUTPUT IMAGE DATA

READ Y COORDINATE Y1 OF CHART — S217

INSTRUCT CONTROL IC TO MOVE CORRECTION LENS TO END IN Y⁺ -DIRECTION — S218

S219

CAUSE CURRENT TO FLOW THROUGH COIL 17Y

S220

OUTPUT IMAGE DATA

S221

READ Y COORDINATE Y2 OF CHART

PROCESSING WITH REGARD TO Y-AXIS DIRECTION

CHANGE DRIVER OUTPUT VALUE TO MAKE Y COORDINATE OF CHART IN IMAGE SENSOR EQUAL TO (Y1+Y2)/2 — S222

S223

CAUSE CURRENT TO FLOW THROUGH COIL 17Y

S224

OUTPUT IMAGE DATA

HOLD DRIVER OUTPUT VALUE OUTMY — S225

WRITE OUTMX AND OUTMY INTO SECOND MEMORY — S226

(D)

(E)

(F)

37

## FIG. 22

Host_CPU
(D)

CONTROL IC
(E)

CAMERA MODULE
(F)

**S227**
MAKE SOCKET OF CAMERA MODULE STAND UP TO MAKE DIFFERENCE BETWEEN X-AXIS DIRECTION AND DIRECTION OF GRAVITY EQUAL TO 45°

**S228**
INSTRUCT CONTROL IC TO MOVE CORRECTION LENS TO END IN X⁻-DIRECTION

**S229**
CAUSE CURRENT TO FLOW THROUGH COIL 17X

OUTPUT IMAGE DATA

**S231**
READ X COORDINATE X3 OF CHART

**S230**

**S232**
INSTRUCT CONTROL IC TO MOVE CORRECTION LENS TO END IN X⁺-DIRECTION

**S233**
CAUSE CURRENT TO FLOW THROUGH COIL 17X

**S234**
OUTPUT IMAGE DATA

PROCESSING WITH REGARD TO X-AXIS DIRECTION

**S235**
READ X COORDINATE X4 OF CHART

**S236**
CHANGE DRIVER OUTPUT VALUE TO MAKE X COORDINATE OF CHART IN IMAGE SENSOR EQUAL TO (X3+X4)/2

**S237**
CAUSE CURRENT TO FLOW THROUGH COIL 17X

**S238**
OUTPUT IMAGE DATA

**S239**
HOLD DRIVER OUTPUT VALUE OUTX

(G)

(H)

(I)

*FIG. 23*

*FIG. 24*

| Host_CPU (D) | CONTROL IC (E) | CAMERA MODULE (F) |
|---|---|---|

S327
MAKE SOCKET OF CAMERA MODULE STAND UP TO MAKE DIFFERENCE BETWEEN X-AXIS DIRECTION AND DIRECTION OF GRAVITY EQUAL TO 45° WHILE RELATIVE POSITIONAL RELATION BETWEEN SOCKET OF CAMERA MODULE AND CHART SHEET IS MAINTAINED

S328
CHANGE DRIVER OUTPUT VALUE TO MAKE X COORDINATE OF CHART IN IMAGE SENSOR EQUAL TO (X1+X2)/2

S329
CAUSE CURRENT TO FLOW THROUGH COIL 17X

OUTPUT IMAGE DATA — S330

HOLD DRIVER OUTPUT VALUE OUTX — S331

CHANGE DRIVER OUTPUT VALUE TO MAKE Y COORDINATE OF CHART IN IMAGE SENSOR EQUAL TO (Y1+Y2)/2 — S332

S333
CAUSE CURRENT TO FLOW THROUGH COIL 17X

OUTPUT IMAGE DATA — S334

HOLD DRIVER OUTPUT VALUE OUTY — S335

CALCULATE OUTGX AND OUTGY — S336

WRITE OUTGX AND OUTGY INTO FIRST MEMORY — S337

MAKE TEST CIRCUIT INEFFECTIVE — S338

Europäisches
Patentamt

European
Patent Office

Office européen
des brevets

# EUROPEAN SEARCH REPORT

Application Number

EP 17 20 8854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2003 091028 A (CANON KK) 28 March 2003 (2003-03-28) * abstract *paragraphs 47, 61 * ----- | 1-15 | INV. H04N5/232 |
| A | US 2012/057035 A1 (VOSS SHANE D [US] ET AL) 8 March 2012 (2012-03-08) * paragraphs [0009], [0012], [0022], [0024] * ----- | 1-15 | |
| A | EP 2 040 118 A1 (CANON KK [JP]) 25 March 2009 (2009-03-25) * paragraphs [0093], [0105] * ----- | 1-15 | |

TECHNICAL FIELDS
SEARCHED      (IPC)

H04N

The present search report has been drawn up for all claims

| Place of search | Date of completion of the search | Examiner |
|---|---|---|
| The Hague | 14 May 2018 | Bequet, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 8854

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2018

| Patent document cited in search report | | Publication date | Patent family member(s) | | Publication date |
|---|---|---|---|---|---|
| JP 2003091028 | A | 28-03-2003 | NONE | | |
| US 2012057035 | A1 | 08-03-2012 | NONE | | |
| EP 2040118 | A1 | 25-03-2009 | CN | 101393377 A | 25-03-2009 |
| | | | EP | 2040118 A1 | 25-03-2009 |
| | | | JP | 5183135 B2 | 17-04-2013 |
| | | | JP | 2009075441 A | 09-04-2009 |
| | | | US | 2009080875 A1 | 26-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016253636 A

- JP 2009168938 A